# EUROPEAN PATENT APPLICATION

(11) **EP 1 376 908 A1**
(43) Date of publication of application: **02.01.2004**
(21) Application number: 02014424.2
(22) Date of filing: 28.06.2002
(51) Int. Cl.: H04B 10/18

(54) **Method for controlling an optical signal distortion compensator**

(71) Applicant: Adaptif Photonics GmbH, 21079 Hamburg (DE)
(72) Inventor: Rosenfeldt, Harald, Dipl.Ing., 20251 Hamburg (DE)
(74) Representative: Eisenführ, Speiser & Partner

(57) **Abstract**

The present invention relates to adaptive optical signal distortion mitigators and in particular to compensators for polarization mode dispersion. The embodiments described in this invention lead to a significant reduction of complexity of PMD compensation systems. Complexity is reduced by a novel method of deriving feed-back signals based on AC peak detection of detector signals.

## Description

### FIELD OF THE INVENTION

The present invention relates generally to controlling a signal distortion mitigator, in particular to controlling an optical signal distortion mitigator, e.g. in optical fiber communication systems, and more particular to the adaptive compensation of polarization mode dispersion in optical signals.

### BACKGROUND OF THE INVENTION

During the last 10 years a tremendous growth has been seen in the application of fiber optic solutions to telecommunications and data communications. For applications requiring either high speeds or long distances, fiber optics now dominates all other technologies. The ongoing growth in bandwidth demand supports the trend of further increasing the per-channel bit rate in deployed networks. State-of-the-art communication systems use channel bit rates as high as 10 Gbit/s or 40 Gbit/s. At these bit rates, fiber properties are critically influencing the quality of the transmitted signal and thus have great impact on the bit error rate (BER) of the link. One important barrier is polarization mode dispersion (PMD).

### SUMMARY OF THE INVENTION

It is an object of the present invention to provide improved controlling of a signal distortion mitigator.

The object is solved by the independent claims.

Impairments to optical signals induced by PMD can more or less solely be compensated by an adaptive optical system rather than a passive one, since PMD-effects can be highly time variant and can change on a millisecond time scale. Ellipticity of the fiber core, as well as mechanical stress, caused for example by fiber bendings, can create propagation constants which are dependent on the signal polarization. An arbitrary polarized signal having an arbitrary state of polarization (SOP) thus can decompose into two orthogonal polarized components traveling at different speeds. In the present application the polarization states of these two signals are referred to as principal states of polarization (PSP), e.g. slow PSP and fast PSP whereas the delay between the two components is referred to as differential group delay (DGD). The influence of PMD on an optical signal can be quite comparable to the phenomenon of multipath propagation and can cause similar distortions such as inter-symbol interference.

A PMD compensator should select the fast fraction of the signal, i.e. the fast PSP, and apply a delay equal to the DGD. This should cause the fast signal to be realigned with the slower traveling signal and can remove the PMD-induced distortions. One possible approach is to use a fixed or tunable DGD element (also having slow and fast PSPs) in conjunction with a polarization controller (PC) between the DGD element and the fiber link. The polarization controller should be adjusted in a way that the fast PSP of the fiber link is aligned to the slow PSP of the DGD element and vice versa. In case of a tunable DGD element, the DGD should be adjusted matching the DGD of the fiber link.

Practical implementations of such a PMD compensator can be operated in a feed-back configuration as disclosed in US patent US 5,930,414. The control elements (e.g. polarization controller and variable DGD) can be adjusted in order to maximize signal quality. It can be demonstrated that the degree of polarization (DOP), measured by a Stokes polarimeter, is a physical property reflecting PMD-induced distortions very well as disclosed in N. Kikuchi et al., "Polarization-Mode Dispersion (PMD) Detection Sensitivity of Degree of Polarization Method for PMD Compensation", Proc. ECOC, Nice, France Vol. II(WeA1.3), pp. 8-9 (1999).

Thus, PMD compensation can be realized by adjusting the control elements in order to maximize the DOP at the output of the whole system. Such a system can suffer from the fact that many control parameters have to be adjusted according to a single scalar feed-back signal. A possible approach is to apply maximum search algorithms which evaluate the DOP gradient with respect to the control parameters. This gradient can be measured by slightly modifying one or more control parameters while observing the changes of the DOP. In the present application this process is referred to as 'dithering'. A problem in these systems can be that such an algorithm can be 'trapped' inside a local optimum; that is, the DOP has to be reduced to some extend on the way to the global DOP maximum. Another disadvantage can be that a polarimeter capable of measuring the DOP can be a complex and thus expensive optical device.

Recently, approaches based on scrambling the input SOP of the optical system tried to overcome the problem of controlling the numerous compensating parameters as disclosed in H. Rosenfeldt et al., Automatic PMD Compensation at 40 Gbit/s and 80 Gbit/s Using a 3-Dimensional DOP Evaluation for Feedback, Proc. OFC, Anaheim, CA, USA, PD27, (2001). These concepts are based on evaluating a plurality of SOPs measured in a short time interval while the input SOP is scrambled. The measured SOPs displayed on the Poincaré sphere form a rotational ellipsoid whose long axis points into the direction of the PSPs and whose short axis relates to the accumulated DGD of the fiber.

Embodiments of the present invention comprise the scrambling approach introduced in the last paragraph. Embodiments of the invention described in the following avoid the use of expensive Stokes polarimeters and provides up to two decoupled feed-back signals, based on simple AC power measurements, which enable separate control of PSP matching and compensator DGD.

In the afore-mentioned prior-art it has been shown that the DOP is a physical property relating to signal distortions caused by the PMD of a fiber link. An undistorted signal is fully polarized (i.e. DOP=1), a distorted signal has a reduced DOP. The amount of DOP reduction depends on the amount of first and higher order PMD, the spectral bandwidth of the signal and the input polarization. Particularly the dependence on input polarization causes problems because a DOP measurement at the output is insensitive to first-order PMD if the input SOP matches the fiber PSP. In this case a delay line compensator usually cannot track the differential group delay (DGD) of the fiber span. This maladjustment becomes relevant as soon as the input SOP moves away from the fiber PSP. If the adjustment cannot be corrected instantaneously the bit error rate (BER) will increase rapidly. This limitation can be overcome by using a polarization scrambler at the fiber input according to the prior art. By this way information on the instantaneous principal states (PSP) as well as on first-order and second-order PMD of the fiber link can be derived. A 3-dimensional DOP detection for generating a control signal is attractive since it works at any modulation format and even for bit rates as high as 160 Gbit/s without the need for high-speed electronics as disclosed in an article of H. Rosenfeldt et al. "Automatic PMD Compensation at 40 Gbit/s and 80 Gbit/s Using a 3-Dimensional DOP Evaluation for Feedback", in Proc. OFC, Anaheim, CA, USA, PD27, (2001).

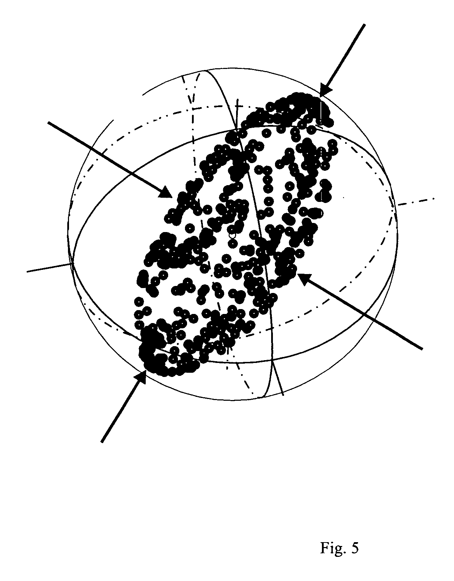

According to this concept a polarization scrambler continuously changes the input SOP and covers the whole Poincaré sphere in a certain time interval. At the fiber output a Stokes polarimeter monitors the variation of the polarization state including the DOP. This polarimeter acquires several SOPs within a certain time interval which are then evaluated by a computer. The normalized SOPs can be depicted as vectors in the 3-dimensional Cartesian Stokes space, where the vector direction is given by the polarization state itself and the vector length is given by the DOP. Thus, in absence of PMD all scrambled SOPs would form a unity sphere, the Poincaré sphere. In a first-order PMD-disturbed system the DOP is equal to unity for input polarizations matching the PSP. The more the input SOPs differ from the PSP, the more the DOP is reduced. Thus, the measured output SOPs form an ellipsoid whose long axis has a length of unity and points into the direction of the PSPs, as can be seen in the experimental data depicted in Fig. 5. The short axis of the ellipsoid relates to the amount of DGD. The exact relationship depends on the particular pulse shape, but in general a slimmer ellipsoid relates to a higher DGD value.

Embodiments of the present invention can reduce complexity of this approach by avoiding the use of expensive Stokes polarimeters. A Stokes polarimeter is commonly realized by splitting the signal into preferably four beams and detecting the signal power of the four beams through polarizing filters. A basic idea of these embodiments is to use only one beam of such a Stokes polarimeter.

If the light is detected through a polarizer whose axis is aligned to the *s*₂-axis of a Stokes coordinate system, the detected power P can be given by: *P* = (1+*s*₂ )*P*_{*sig*}, where *s*₂ and *P*_{*sig*} denote the second normalized Stokes parameter and the total signal power respectively.

Embodiments of the present invention allow deriving a feed-back signal for matching the fiber PSP onto the axis of the polarizer or the polarizing beam splitter. In both embodiments, the polarized light is detected and the peak AC level is measured. Instead of applying electrical filters this operation can be realized by a digital signal processor after A/D-conversion. The controller uses the PC to maximize the measured peak AC level. If the maximum is found, the PSP of the fiber are aligned to the axis of the polarizer or the PBS. Given this setup, the detector signal P fluctuates according to the SOP changes in front of the polarizer. The amplitude (i.e. the difference between maximum and minimum received power of the detector signal) of the fluctuations is a measure for the orientation of the ellipsoid relative to the polarizer axis. If the ellipsoid is aligned to the polarizer axis, i.e. the PSPs are matched onto the polarizer axis, the amplitude of the fluctuations is maximal. Measuring the amplitude *P*_{*AC*} of the power fluctuations is a simple task and can for example be done by removing the DC-part using a high pass filter and performing a peak rectification.

Consequently the PSPs of the fiber can be matched to the polarizer axis by maximizing *P*_{*AC*} using a PC adjusted by a feed-back controller.

In a similar embodiment a polarizing beam splitter can be used instead of a polarizer. Using one of these embodiments is particularly advantageous since no complex calculation is necessary to derive the feed-back signal. As opposed to the implementation of a complete Stokes polarimeter, no floating point arithmetic is required and thus reduces the requirements for the DSP or micro controller.

To compensate for PMD, the light traveling in the fast PSP should be delayed by the DGD to coincide with the light traveling in the slow PSP. Assuming the PSPs are aligned to the polarizer or PBS axes as described above, the orientation of the PSPs is known. Therefore, PMD can be compensated by introducing a tunable birefringent element (DGD element) whose axes are aligned to those of the polarizer or PBS. This can be realized with an appropriately oriented tunable DGD element. The control signal for the tunable DGD element can be derived in a very similar way as for the PC. An additional benefit of this embodiment is that the PC and the DGD element can be adjusted by independent feed-back loops.

In a further preferred embodiment of the present invention the above described embodiment is extended by a tunable DGD element. The axes of the DGD element are aligned to the axis of the polarizer. Thus, if *P*_{*AC*} is maximized, the signal of the slow PSP and the fast PSP are traveling in the principal axes of the DGD element. At the output of the setup, a polarizer oriented 45° to the axes of the DGD element is used to generate a detector signal *Q*_{*AC*}*.* A second controller maximizes this peak AC level by means of the tunable DGD element.

In an alternative embodiment the PBS is used to generate a signal *P*_{*AC*} and to introduce a variable time delay between the two emerging signals. An equivalent embodiment based on the above described embodiment, where the signal is split into two orthogonal polarized signals (TE and TM polarization). Delaying one of these signals with respect to the other before recombining them again has the same effect as introducing the DGD element of the afore mentioned embodiment.

In order to minimize the number of polarizing elements, e.g. on a planar wave guide circuit (PLC), it may be advantageous to detect the DGD feed-back signal before the two beams are recombined. In that case the superposition of the two signals rotated into the same polarization plane can create the same signal as with the 45° polarizer. This can be realized for example by rotating one of the signals by 90° (i.e. converting it from TE to TM or vice versa) and superimposing them by a 50% directional coupler.

As described in an article of H. Rosenfeldt et al. "Feed-Forward Approach for Automatic PMD-Compensation at 80 Gbit/s over 45 km Installed Single Mode Fiber" in Proc. ECOC, Amsterdam, The Netherlands, PD.4.8, (2001), it can be disadvantageous to operate an adaptive compensator in a feed-back loop combined with dithering one or more control parameters. In such systems the control element(s) have to be significantly faster than the desired response time would imply. Therefore, it is advantageous to measure the distortion at the input of the control element and to calculate the optimum setting of the control element from that measured value. Based on this calculation the control element can be tuned directly to the appropriate value without the need for dithering. In an embodiment following this approach a signal *Q*_{*AC*} is derived from the optical signal in front of a DGD element and thus measures the short axis of the ellipsoid before PMD compensation. This value is related to the DGD accumulated on the fiber link. If the relationship between these two parameters is known, the compensator DGD can be calculated from the measured signal *Q*_{*AC*}*.* Then, the DGD element can be directly set to the appropriate value.

An amendment to the latter embodiment relates to the sign detection of the DGD. A problem with the latter embodiment can arise when fast and slow PSP cannot be distinguished. Due to the PSP control concept, the PSPs are aligned to the 0°-polarizer meaning that one PSP is aligned to the 0° linear polarization and the other one is aligned to 90° linear polarization. However, it is unknown which of the both PSPs is the fast and which is the slow one. Hence, the DGD derived from *Q*_{*AC*} could indicate a compensator DGD with a positive or a negative sign.

With the latter embodiment the sign more or less can only be detected with a trial-and-error approach observing the bit error rate while trying either the positive and negative DGD. Therefore, in another embodiment of the present invention a third path with an AC peak detector producing a signal *ΔQ*_{*AC*} is introduced with a polarizer oriented similarly to the polarizer of the *Q*_{*AC*} path to solve this problem. A fixed DGD element with a small DGD value of *ΔDGD* and a known sign is inserted before the polarizer. This signal *ΔQ*_{*AC*} can be interpreted as the short axis of the ellipsoid which would occur if the signal was compensated with a DGD value of *ΔDGD.* In this way the DGD controller can distinguish whether the DGD element set to a positive value would cause a reduction of the short axis or not. Hence, the sign detection can be realized by comparing the signals *Q*_{*AC*} and *ΔQ*_{*AC*}.

In a further preferred embodiment a similar concept can be applied in a feed-back circuit to avoid dithering of the compensator DGD. Here, two additional signals + *ΔQ*_{*AC*} *and - Δ*Q_{AC} are derived at the output in addition to the signal *Q*_{*AC*}*.* In front of each of the two polarizers fixed DGD elements having a small positive and negative DGD are inserted into the optical path. Consequently the signals + *ΔQ*_{*AC*} and *- ΔQ*_{*AC*} are the signals which would occur at *Q*_{*AC*} if the compensator DGD was increased or decreased by *ΔDGD* respectively. Thus, by comparing + *ΔQ*_{*AC*} and - *ΔQ*_{*AC*} with *Q*_{*AC*} information for the DGD element can be generated to adjust its DGD in a feed-back loop. An advantage of embodiments of the present invention is that they can provide two independent control signals which enable to control the PC and the DGD in two separate feed-back loops. This eliminates the problem of running into local optima and improves robustness of the PMD compensation setup.

Furthermore, the feed-back signals are much simpler to measure than the complete SOP (i.e. the Stokes vector) or DOP since no polarimeter is needed. This leads to cost reductions also because complex floating point arithmetic can be avoided by the control algorithm and thus the need for a high-performance DSP or micro controller can be avoided.

Other preferred embodiments of the present invention are shown by the dependent claims.

It is clear that the invention can be partly embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principals of the present invention. Features that are substantially or functionally equal or similar will be referred to with a same reference sign(s).
- Fig.1 (a): shows an embodiment of the present invention for adaptively aligning the fiber principal states to the axis of a polarizer;
- Fig. 1(b): shows an embodiment of the present invention for adaptively aligning fiber principal states to the axes of a polarizing beam splitter;
- Fig. 2(a): shows an embodiment of the present invention for adaptively aligning fiber principal states to an axis of a polarizer and compensating the accumulated DGD;
- Fig. 2(b): shows an embodiment of the present invention for adaptively aligning fiber principal states to the axis of a polarizing beam splitter. The beam splitter is used for generating a feed-back signal and to introduce a delay between TE and TM polarization at the same time;
- Fig. 2c: shows the embodiment of Fig. 2(b) with a control signal derived from the signals before they are recombined;
- Fig. 3(a): shows an embodiment of the present invention for controlling compensator DGD in a feed-forward configuration rather than in a feedback configuration;
- Fig. 3(b): shows an embodiment of the present invention for determining fast and slow principal state of a fiber;
- Fig. 4: shows an embodiment of the present invention for generating servo control information for a DGD element;
- Fig. 5: shows a perspective view of a Poincaré sphere with measured values of polarization states of a modulated data signal in presence of PMD. The polarization of the signal is continuously changed by a polarization scrambler. The polarization states form an ellipsoid in Stokes space;
- Fig. 6(a): shows a 2-dimensional view on the Poincaré sphere of Fig. 5 with a corresponding plot of a detector signal after a polarizer with the ellipsoid of Fig. 5 unaligned to the axes; and
- Fig. 6(b): shows a 2-dimensional view on the Poincaré sphere of Fig. 5 with a corresponding plot of a detector signal of a polarizer aligned to the principal states *(P*_{*AC*}*)* and 45° with respect to the principal states *(Q*_{*AC*}*)*. AC peak detection of the both signals reveals the length of the long *(P*_{*AC*}*)* and short axis (*Q*_{*AC*}*)* of this ellipsoid.

### DETAILED DESCRIPTION OF THE INVENTION

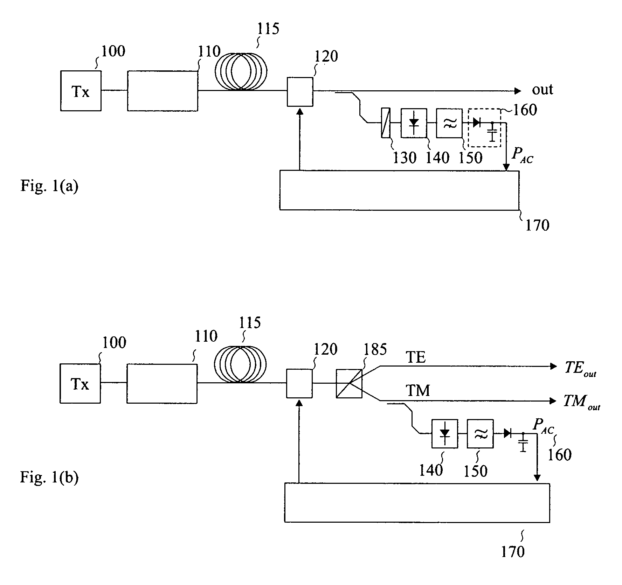

Fig. 1 shows in Fig. 1(a) and (b) two embodiments of the present invention which allow deriving a feed-back signal for matching or adaptively aligning PSP of a fiber 100 having an unknown polarization axis onto an axis of a polarizer 130 (Fig. 1(a)) or in Fig. 1(b) of a polarizing beam splitter (PBS) 185 using an SOP scrambler 110. Loops 115 are indicating PMD of the fiber 100. In both embodiments, the polarized light is detected by a detector 140 and filtered by a high pass filter 150 and the peak AC level is measured by a device 160. Alternatively, instead of applying electrical filters 150 and 160 as depicted in Fig. 1 (a) and (b) this operation can be realized by a digital signal processor after A/D-conversion. Then, a controller 170 uses a PC 120 to maximize the measured peak AC level. If a maximum is found, the PSP of the fiber are aligned to the axis of the polarizer 130, 120 or the PBS 185.

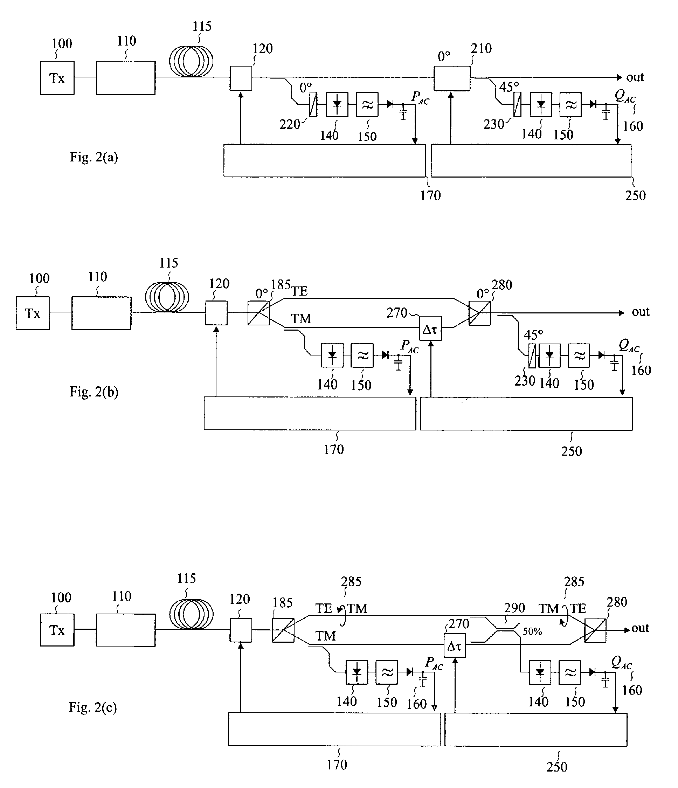

Fig. 2(a) shows the previously described embodiment of Fig. 1(a) extended by a tunable DGD element 210. The axes of the DGD element 210 are aligned to the axis of a first polarizer 220. Thus, if *P*_{*AC*} is maximized, the signal of the slow PSP and the fast PSP are traveling in the principal axes of the DGD element 210. At the output "out" of the setup, a second polarizer 230 oriented 45° to the axes of the DGD element 210 is used to generate a detector signal *Q*_{*AC*}*. A* second controller 250 maximizes this peak AC level by means of the tunable DGD element 210.

Alternative setups are shown in Fig. 2(b) and 2(c). In order to minimize the number of polarizing elements, e.g. on a planar wave guide circuit (PLC), it may be advantageous to detect the DGD feed-back signal before the two beams are recombined by PBS 280. In that case the superposition of the two signals rotated into the same polarization plane creates the same signal as with the 45° polarizer 130. According to Fig. 2(c) this can be realized for example by rotating one of the signals by 90° (i.e. converting the signals from TE to TM or vice versa) and superimposing them by a 50% directional coupler 290.Accordingly, in Fig. 2(c), a TE/TM-converter 285 and a 50%-coupler 290 behind PBS 185 but before PBS 280 are used to create interference between the two separated polarization modes and to generate a signal *Q*_{*AC*} by means of a polarizer 230 oriented 45° to the axes of the output, a filter 150 and a device 160 at the output of the 50%-coupler 290. In both Fig. 2(b) and (c) a first PBS 185 is used to generate the signal *P*_{*AC*} and to introduce a variable time delay Δτ between two emerging signals TE and TM. In Fig. 2(b), the two emerging signals TE and TM are combined by a second PBS 280 and a signal *Q*_{*AC*} is generated by means of a polarizer 230, oriented 45° to the axes of the output of PBS 280, a filter 150 and a device 160. The signal *Q*_{*AC*} of Fig. 2(b) and (c) is identical to the corresponding signal of Fig. 2(a) and is provided to the second controller 250. In Fig. 2(b) delaying one of the TE and TM polarization signals with respect to the other before recombining them again has the same effect as introducing the DGD element 210 of Fig. 2(a).

The just described embodiments of the present invention can reduce complexity of solutions using the polarization scrambler by avoiding the use of expensive Stokes polarimeters. As indicated above, a Stokes polarimeter can also be realized by splitting the signal into four beams and detecting the signal power of the four beams through polarizing filters. However, a basic idea of the embodiments of Fig. 1 is to use only one beam of such a Stokes polarimeter. If the light is detected through a polarizer 130 whose axis is aligned to the *s*₂-axis of the Stokes coordinate system, the detected power P is given by: P =(1+*s*₂)*P*_{*sig*}*,* where *s*_{*2*} and *P*_{*sig*} denote the second normalized Stokes parameter and the total signal power respectively. According to the embodiment of Fig. 1 (a), the detector signal P fluctuates according to the SOP changes in front of the polarizer 130.

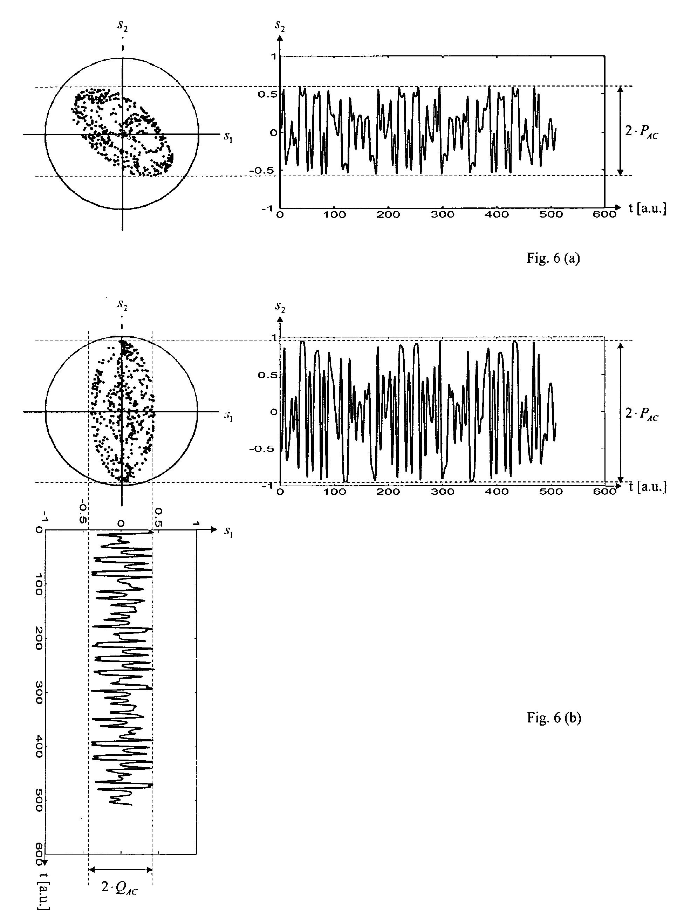

Fig. 6(a) illustrates how the detector signal changes for an arbitrary ellipsoid. The amplitude (i.e. the difference between maximum and minimum received power) of the fluctuations is a measure for the orientation of the ellipsoid relative to the polarizer axis. If the ellipsoid is aligned to the polarizer axis, i.e. the PSPs are matched onto the polarizer axis, the amplitude of the fluctuations is maximal as shown in Fig. 6(b). Measuring the amplitude *P*_{*AC*} of the power fluctuations can for example be done by removing the DC-part using a high pass filter 150 and performing a peak rectification according to Fig. 1(a). Consequently, the PSPs of the fiber can be matched to the polarizer axis by maximizing *P*_{*AC*} using a PC 120 adjusted by a feed-back controller. Similar to Fig. 1(a) Fig. 1(b) shows a setup using a polarizing beam splitter 185 instead of a polarizer 130.

To compensate for PMD, the light traveling in the fast PSP has to be delayed by the DGD to coincide with the light traveling in the slow PSP. Assuming the PSPs are aligned to the polarizer or PBS axes as described above, the orientation of the PSPs is known. Therefore, PMD can be compensated by introducing a tunable birefringent or DGD element 210 whose axes are aligned to those of the polarizer 130 or PBS 185. Fig. 2(a) shows the setup of Fig. 1(a) with the appropriately oriented tunable DGD element 210. The control signal for the tunable DGD element 210 can be derived in a very similar way as for the PC 120. As indicated above, in Fig. 2(a) the peak power fluctuation *Q*_{*AC*} is measured through a polarizer 220 oriented 45° with respect to the DGD element 210. This corresponds to a polarizer 130 aligned to the s₁-axis of the Poincaré sphere and therefore measures the short axis of the ellipsoid (for the ellipsoid see Fig. 6(b)). The DGD element 210 has to be adjusted in a way maximizing the length of the short axis and thus maximizing *Q*_{*AC*} *.* An additional benefit of the whole setup is that the PC 120 and the DGD element 210 can be adjusted by independent feed-back loops.

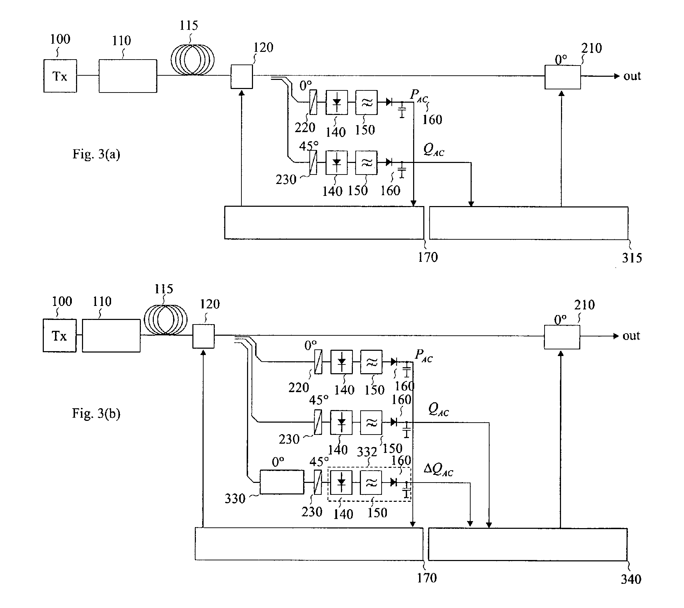

It can be disadvantageous to operate an adaptive compensator in a feed-back combined with dithering one or more control parameters. In such systems the control element(s) have to be significantly faster than the desired response time would imply. Therefore, it can be advantageous to measure the distortion at the input of the control element and to calculate the optimum setting of the control element from that measured value. Based on this calculation the control element can be tuned directly to the appropriate value without the need for dithering. Fig. 3(a) shows an embodiment following this approach. The signal *Q*_{*AC*} is derived from the optical signal in front of a DGD element 210 by a polarizer 320, a detector 140, a filter 150, a device 160 and a DGD controller 315 and thus measures the short axis of the ellipsoid before PMD compensation. This value is related to the DGD accumulated on the fiber link 100. If the relationship between these two parameters is known, the compensator DGD can be calculated by the DGD controller 315 from the measured signal *Q*_{*AC*} *.* Then, the DGD element 210 can be directly set to the appropriate value by the DGD controller 315.

An amendment to the embodiment of Fig. 3(a) relates to the sign detection of the DGD. A problem with the embodiment of Fig. 3(a) can arise because fast and slow PSP may not be distinguished. Due to the PSP control concept, the PSPs are aligned to the 0°-polarizer meaning that one PSP is aligned to the 0° linear polarization and the other one is aligned to 90° linear polarization. However, it is unsure which of the both PSPs is the fast and which is the slow one. Hence, the DGD derived from *Q*_{*AC*} could indicate a compensator DGD with a positive or a negative sign. With the embodiment of Fig. 3(a) the sign more or less can only be detected with a trial-and-error approach observing the bit error rate while trying either the positive and negative DGD.

Fig. 3(b) shows a possible solution to this problem. A third path with an AC peak detector 332 producing a signal *ΔQ*_{*AC*} is introduced comprising a detector 140, a filter 150 and a device 160. A polarizer oriented similarly to the polarizer 230 of the *Q*_{*AC*} path and before the polarizer a fixed DGD element 330 with a small DGD value of *ΔDGD* and a known sign are inserted before the detector 332. This signal *ΔQ*_{*AC*} can be interpreted as the short axis of the ellipsoid which would occur if the signal was compensated with a DGD value of *ΔDGD.* In this way a DGD controller 340 can distinguish whether the DGD element 210 set to a positive value would cause a reduction of the short axis or not. Hence, the sign detection can be realized by comparing the signals *Q*_{*AC*} and *ΔQ*_{*AC*}*.*

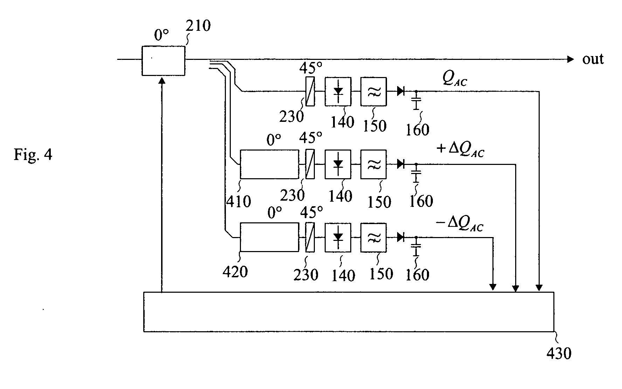

According to the embodiment of Fig. 4 a similar concept can be applied in a feed-back circuit to avoid dithering of the compensator DGD. Here, two additional signals +*ΔQ*_{*AC*} and *-ΔQ*_{*AC*} are derived at the output in addition to the signal *Q*_{*AC*}*.* In front of each of the two polarizers fixed DGD elements having a small positive and negative DGD are inserted into the optical path. Consequently the signals +*ΔQ*_{*AC*} *and - ΔQ*_{*AC*} are the signals which would occur at *Q*_{*AC*} if the compensator DGD was increased or decreased by *ΔDGD* respectively. Thus comparing + *ΔQ*_{*AC*} *and - ΔQ*_{*AC*} with *Q*_{*AC*} information for the DGD element 210 can be generated to adjust its DGD in a feed-back loop.

## Claims

1. Method for matching a PSP of a signal to an axis of a first polarizing element (130, 185, 220) having a signal-SOP dependent characteristic, comprising the steps of:
changing the SOP of the signal,
letting the signal travel through the first polarizing element (130,185, 220),
measuring a first amplitude *(P*_{*AC*}*)* of power fluctuations of the signal,
adjusting the SOP of the signal by means of PC (120) before the first polarizing element (130, 185, 220) in a way that the first amplitude *(P*_{*AC*}*)* is maximized.

2. The method of claim 1, further comprising the step of:
changing the SOP of the signal before its SOP is manipulated by means of a PC (120).

3. The method of claim 1 or any one of the above claims, further comprising the step of:
continuously changing the SOP of the signal.

4. The method of claim 1 or any one of the above claims, further comprising the step of:
deterministically changing the SOP of the signal.

5. The method of claim 1 or any one of the above claims, further comprising the step of:
randomly changing the SOP of the signal.

6. The method of claim 1 or any one of the above claims, further comprising the step of:
letting the PSP-matched signal travel through a compensator DGD to compensate a DGD in the signal.

7. The method of claim 6, further comprising the steps of:
creating a compensator DGD and compensating the DGD of the signal with the compensator DGD by:
letting the signal travel through a second polarizing element (230, 290) having a signal-SOP dependent characteristic,
measuring a second amplitude *(Q*_{*AC*}*)* of power fluctuations of the signal, adjusting the DGD of the signal by means of a tunable DGD element (210, 270) in a way that the second amplitude *(Q*_{*AC*}*)* is maximized.

8. The method of claim 7, further comprising the steps of:
adjusting the DGD of the signal by means of the tunable DGD element (210, 270) before or after the second polarizing element (230, 290).

9. The method of claim 6 or any one of the above claims 7 and 8, further comprising the steps of:
determining a fast and a slow PSP of the PSP of the signal by:
letting the signal travel through a fixed-DGD element (330) having a fixed value of DGD with a known sign and through a third polarizing element (230) having a signal-SOP dependent characteristic,
measuring a third amplitude (Δ*Q*_{*AC*}*)* of power fluctuations of the signal,
comparing the second amplitude *(Q*_{*AC*}*)* with the third amplitude (Δ *Q*_{*AC*}*)* to evaluate the fast and the slow PSP of the PSP of the signal.

10. The method of claim 6 or any one of the above claims 7-9, further comprising the step of:
aligning the birefringent axes of the tunable DGD element to the PSP of the signal.

11. The method of claim 6 or any one of the above claims 7-10, further comprising the steps of:
splitting the signal in a first (TE) and a second (TM) part using the first polarizing element (130, 185, 220) comprising a first PBS (185) after the PC (120),
recombining the first (TE) and the second (TM) part with the second polarizing element (230, 290) comprising a second PBS (280),
adjusting the DGD by means of a variable delay (τ) between the first (TE) and the second (TM) part with respect to each other and applying the delay (τ) to one of the first (TE) and the second (TM) part in a way that the second amplitude *(Q*_{*AC*}*)* is maximized.

12. The method of claims 11, further comprising the steps of:
adjusting the first (TE) and the second (TM) part to the same SOP and superimposing both parts (TE, TM) to create interference between the two separated polarization modes before recombining both parts (TE, TM),
measuring a third amplitude *(Q*_{*AC*}*)* of power fluctuations of the signal, adjusting the DGD by means of a variable delay (τ) between the first (TE) and the second (TM) part before superimposing the first (TE) and the second (TM) part in a way that the third amplitude *(Q*_{*AC*}*)* is maximized.

13. The method of claim 7 or any one of the above claims 8-12, further comprising the steps of:
compensating a DGD of the tunable DGD element (210, 270) comprising the steps of:
measuring a second amplitude *(Q*_{*AC*}*)* according to claim 6,
performing the same measurement with a single fixed DGD element (410, 420) of either positive or negative sign and same orientation as the tunable DGD element (210, 270), or
performing the same measurement with two fixed delay elements (410, 420) having a positive and a negative sign and the same orientation as the tunable DGD element (210, 270),
deriving a control signal for the DGD element from the measured signals.

14. The method of claim 1 or any one of the above claims,
wherein the first polarizing element (130, 185, 220) and the second polarizing element (230, 290) being the same element.

15. The method of claim 1 or any one of the above claims,
wherein at least one of the first polarizing element (130, 185, 220) and the second polarizing element (230, 290) comprises at least one of the following: a polarizer (130, 220), a PBS (185, 280) an element having polarization dependent loss, an element having a polarization dependent transmission coefficient.

16. A software program or product, preferably stored on a data carrier, for executing the method of one of the claims 1 - 15 when run on a data processing system such as a computer.

17. An apparatus for matching a PSP of a signal to an axis of a first polarizing element (130, 185, 220) having a signal-SOP dependent characteristic, comprising:
a SOP scrambler (110) for changing the SOP of the signal,
a first coupler for letting the signal travel through the first polarizing element (130, 185, 220),
a detector (140) for measuring a first amplitude *(P*_{*AC*} *)* of power fluctuations of the signal,
a PSP controller (170) for adjusting the SOP of the signal by means of a PC (120) before the first polarizing element (130, 185, 220) in a way that the first amplitude *(P*_{*AC*}*)* is maximized.

18. The apparatus of claim 17, further comprising:
a DGD controller (250, 315, 340, 430) to adjust a compensator DGD to compensate a DGD of the PSP-matched signal.

19. The apparatus of claim 18, further comprising:
a second coupler letting the signal travel through a second polarizing element (230, 290) having a signal-SOP dependent characteristic, a second detector (140) measuring a second amplitude *(Q*_{*AC*}*)* of power fluctuations of the signal, adjusting the DGD of the signal, enabling the DGD controller (250, 315, 340, 430) in a way that the second amplitude *(Q*_{*AC*}*)* is maximized for creating a compensator DGD and for compensating the DGD of the signal with the compensator DGD by means of a tunable DGD element (210, 270).

20. The apparatus of claim 18,
wherein the tunable DGD element (210, 270) is positioned before or after the second polarizing element (230, 290).

21. The apparatus of claim 17 or any one of the above claims 18-20, further comprising:
a fixed-DGD element (330) having a fixed value of DGD with a known sign,
a third polarizing element (230) having a signal-SOP dependent characteristic,
a third detector (140) for measuring a third amplitude *(ΔQ*_{*AC*}*)* of power fluctuations of the signal, enabling the DGD controller (250, 315, 340, 430) to compare the second amplitude *(Q*_{*AC*}*)* with the third amplitude *(Q*_{*AC*}*)* to evaluate the fast and the slow PSP of the PSP of the signal.

22. The apparatus of claim 17 or any one of the above claims 18-21, further comprising:
the first polarizing element (130, 185, 220) comprising a first PBS (185) after the PC (120) for splitting the signal in a first (TE) and a second (TM) part,
the second polarizing element (230, 290) comprising a second PBS (280) for recombining the first (TE) and the second (TM) part,
a delay element (270) for adjusting the DGD by means of a variable
delay (τ) between the first (TE) and the second (TM) part with respect to each other and applying the delay (τ) to one of the first (TE) and the second (TM) part in a way that the second amplitude *(Q*_{*AC*}*)* is maximized.

23. The apparatus of claim 22, further comprising:
a rotator (285) for adjusting the first (TE) and the second (TM) part to the same SOP,
a third coupler (290) for superimposing both parts (TE, TM) to create interference between the two separated polarization modes before recombining both parts (TE, TM),
a fourth detector (140) for measuring a third amplitude *(Q*_{*AC*}*)* of power fluctuations of the signal, enabling the DGD controller (250, 315, 340, 430) to adjust the DGD by means of a variable delay (τ) between the first (TE) and the second (TM) part before superimposing the first (TE) and the second (TM) part in a way that the third amplitude *(Q*_{*AC*}*)* is maximized.

24. The apparatus of claim 17 or any one of the above claims 18-23, comprising:
compensating a DGD of the tunable DGD element (210, 270) comprising the steps of:
a fifth detector (140) for measuring a second amplitude *(Q*_{*AC*}*)* according to claim 7,
a sixth detector (140) for performing the same measurement with a single fixed DGD element (410, 420) of either positive or negative sign and same orientation as the tunable DGD element (210, 270), or
a sixth detector (140) for performing the same measurement with two fixed delay elements (410, 420) having a positive and a negative sign and the same orientation as the tunable DGD element (210, 270), enabling a control element (430) to derive a control signal for the DGD element (210) from the measured signals.

25. The apparatus of claim 17 or any one of the above claims 18-24,
wherein the first polarizing element (130, 185, 220) and the second polarizing element (230, 290) being the same element.

26. The apparatus of claim 17 or any one of the above claims 18-25,
wherein at least one of the first polarizing element (130, 185, 220) and the second polarizing element (230, 290) comprises at least one of the following: a polarizer (130, 220), a PBS (185, 280) an element having polarization dependent loss, an element having polarization dependent transmission coefficient.
